# FASCICULE DE BREVET EUROPEEN

(11) **EP 3 619 255 B1**
(45) Date de publication et mention de la délivrance du brevet: **21.04.2021**
(21) Numéro de dépôt: 18722550.3
(22) Date de dépôt: 07.05.2018
(51) Int. Cl.: C08J 5/04, C08G 63/672, C08G 63/183, C08L 67/02

(54) **COMPOSITE THERMOPLASTIQUE**
THERMOPLASTISCHER VERBUNDSTOFF
THERMOPLASTIC COMPOSITE

(30) Priorité: 05.05.2017 FR 1754004
(43) Date de publication de la demande: 11.03.2020
(73) Titulaire: Roquette Frères, 62136 Lestrem (FR)
(72) Inventeur: AMEDRO, Hélène, 62400 Bethune (FR); CORPART, Jean-Marc, 59130 Lambersart (FR); JACQUEL, Nicolas, 59130 Lambersart (FR); SAINT-LOUP, René, 59160 Lomme (FR)
(74) Mandataire: Plasseraud IP
(86) Numéro de dépôt international: PCT/EP2018/061723
(87) Numéro de publication internationale: WO 2018/202917

(56) Documents cités:
- WO-A1-2016/066956
- FR-A1- 3 036 400
- DATABASE WPI Week 201377 Thomson Scientific, London, GB; AN 2013-M96759 XP002777247, & CN 102 719 059 A (SHANGHAI SUNNY NEW TECHNOLOGY DEV CO LTD) 10 octobre 2012 (2012-10-10)

## Description

### DOMAINE DE L'INVENTION

L'invention se rapporte au domaine des matériaux et concerne un composite thermoplastique et son procédé de fabrication, ledit composite étant particulièrement adapté pour le recyclage.

### ARRIERE-PLAN TECHNOLOGIQUE

En raison de leurs propriétés mécaniques, les matériaux plastiques et notamment les polymères thermoplastiques, sont largement utilisés dans l'industrie pour la fabrication d'une multitude de produits. Ainsi, les industriels sont sans cesse à la recherche de nouveaux procédés permettant d'améliorer les propriétés des polymères existant ou de nouveaux polymères présentant des propriétés améliorées.

A ce titre, afin d'augmenter la résistance mécanique des polymères, il est connu d'y incorporer des composés divers afin de d'obtenir des matériaux composites présentant des propriétés mécaniques améliorées. Ces composés divers jouent le rôle de renfort améliorant substantiellement le comportement mécanique des polymères au sein desquels ils sont incorporés. Ces renforts sont généralement des fibres, telles que des fibres naturelles, des fibres synthétiques, des fibres de carbone ou encore, des fibres de verres.

Depuis quelques années, le marché des matériaux composites ne cesse de se développer. Ainsi, de nombreux secteurs d'activités, tels que le médical, le sport, l'automobile, ou encore l'énergie verte, intègrent ces matériaux dans la conception de leurs produits.

Les matériaux composites constituent de nouvelles sources d'innovation et offrent de nouvelles opportunités de croissance pour l'industrie. Ils sont définis comme des matériaux constitués d'un renfort et d'une matrice, et se distinguent des autres produits plastiques de synthèse par des caractéristiques qui leur permettent, avec des propriétés d'inaltérabilité et de faible poids, de pouvoir se substituer dans certains cas à des pièces métalliques.

Cependant, comme tout matériau, de surcroît lorsque ces derniers sont produits à grande échelle, la question du recyclage se pose inexorablement.

L'hétérogénéité liée à la nature même des matériaux composites leur procure un intérêt majeur aux travers des propriétés combinées de la matrice et des fibres, mais c'est aussi le paramètre qui les rend difficile à recycler. En outre, les matériaux composites sont anisotropes, c'est-à-dire que les propriétés ne sont pas les mêmes dans toutes les directions, et ils peuvent contenir des mousses, des inserts ou même dans certains cas, des capteurs. Ainsi, il existe une telle diversité de matière à traiter, que leur recyclage est compliqué et coûteux.

Depuis plusieurs années, les efforts se portent sur les matériaux composites constitués d'une matrice thermodurcissable. Ces composites dits "thermodurs" représentent en effet plus de 95 % des composites utilisés dans l'industrie. En alternative, des composites dits « thermoplastiques » commencent à se développer et présentent l'avantage non négligeable de disposer d'une matrice pouvant être fondue et de nouveau mise en forme, ce qui est impossible pour les matériaux thermodurs, facilitant ainsi les possibilités de recyclage.

Pour autant, lorsqu'il s'agit de dissocier la fibre de la matrice en vue de recycler ces matériaux, les problématiques restent les mêmes pour les deux familles de composites. Les techniques les plus sophistiquées dans lesquelles la matrice est décomposée sans dégradation de la fibre, en sont encore pour la plupart au stade expérimental. Il s'agit par exemple de techniques telles que la solvolyse, la pyrolyse ou la thermolyse qui font appels à la chimie, la chaleur ou la thermodynamique pour récupérer une fibre réutilisable.

A l'heure actuelle les options techniques pour le recyclage des composites sont multiples. Ainsi, le recyclage peut être réalisé par des méthodes chimiques, thermiques (hors incinération), mécaniques, par incinération, ou en dernier recours, par mise en décharge.

Les techniques mécaniques peuvent consister à broyer les pièces composites en fin de vie et permettent ainsi de récupérer de la matière sous forme de poudre. Dans certains cas, cette matière est réinjectée dans le domaine de la plasturgie, pour en faire des pièces techniques, mais d'une manière générale, ces poudres sont utilisées pour faire du volume à bas coût dans les bétons par exemple, en concurrence notamment du sable ou du talc.

L'incinération s'avère également être une alternative en plein développement. Dans ce cas précis, il ne s'agit pas de recyclage à proprement parler, mais bien de valorisation puisqu'en brûlant les matériaux composites broyés, on peut ainsi récupérer l'énergie calorifique de la matrice, elle-même issue du pétrole. Les cimenteries, dont les fours peuvent chauffer jusqu'à 2 000 °C en sont les consommateurs idéaux.

Néanmoins, reste que pour valoriser les 90 % des déchets de matériaux composites qui partent actuellement en enfouissement, il existe un besoin de trouver des alternatives et de développer de nouveaux composites facilement recyclables

CN-A-102719059 décrit un composite thermoplastique adapté pour le recyclage comprenant un polyester thermoplastique renforcé avec des fibres en polyester.

Il est donc du mérite de la demanderesse d'avoir mis au point, après de nombreuses recherches, un composite entièrement thermoplastique présentant une facilité de recyclage jusqu'alors jamais atteinte, ledit composite pouvant être entièrement recyclé sans qu'il soit nécessaire de séparer les fibres de la matrice.

### RESUME DE L'INVENTION

Un premier objet de l'invention concerne ainsi un composite thermoplastique comprenant :
- une matrice polymère thermoplastique, ladite matrice comprenant un polyester thermoplastique amorphe comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] est d'au moins 0,32 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g,
- des fibres polymère thermoplastique, lesdites fibres comprenant un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] est d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

Un second objet concerne un procédé de fabrication d'un composite thermoplastique, ledit procédé comprenant les étapes suivantes de :
a) fourniture d'une matrice en polymère telle que décrite précédemment,
b) fourniture de fibres en polymère telles que décrites précédemment,
c) préparation d'un composite thermoplastique à partir de ladite matrice et desdites fibres.

Le composite thermoplastique selon l'invention est entièrement thermoplastique, aussi bien la matrice que le renfort en fibres, et présente notamment comme avantage d'obtenir des facilités de recyclage jusqu'alors jamais atteinte.

En effet, le caractère entièrement thermoplastique du composite selon l'invention permet notamment de s'affranchir de l'étape de séparation habituellement mise en œuvre. Ainsi, le recyclage est plus efficient, moins couteux, et permet d'obtenir non plus un composite, mais un matériau uniforme thermoplastique qui pourra être utilisé pour une multitude d'applications plastiques. En termes de recyclage et de valorisation des matériaux, et notamment des matériaux thermoplastiques, le composite thermoplastique selon l'invention s'inscrit donc comme une rupture technologique.

### DESCRIPTION DETAILLEE

Un premier objet de l'invention concerne donc un composite thermoplastique comprenant :
- une matrice polymère thermoplastique, ladite matrice comprenant un polyester thermoplastique amorphe comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] est d'au moins 0,32 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g,
- des fibres polymère thermoplastique, lesdites fibres comprenant un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] est d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

Le composite thermoplastique selon l'invention comprend donc une matrice thermoplastique comprenant un polyester thermoplastique amorphe.

Plus particulièrement, il s'agit d'un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,32 et d'au plus 0,75.

Le polyester thermoplastique est exempt de motifs diol aliphatique non cyclique ou comprend une faible quantité molaire de motifs diol aliphatique non cyclique.

Par « faible quantité molaire de motifs diol aliphatique non cyclique», on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

D'une manière avantageuse, la quantité molaire de motif diol aliphatique non cyclique est inférieure à 1%. De préférence, le polyester est exempt de motif diol aliphatique non cyclique et plus préférentiellement, il est exempt d'éthylène glycol.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Malgré la faible quantité de diol aliphatique non cyclique, et donc d'éthylène glycol, utilisé pour la synthèse, il est obtenu un polyester thermoplastique présentant une viscosité réduite en solution élevée et dans lequel l'isosorbide est particulièrement bien incorporé.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB® P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration cis, dans la configuration trans ou peut être un mélange de diols en configuration cis et trans.

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,32 et d'au plus 0,75. De cette manière, le polyester thermoplastique est amorphe et se caractérise par une absence de raies de diffraction aux rayons X et par une absence d'un pic de fusion endothermique en analyse calorimétrique différentielle à balayage (DSC).

Un polyester thermoplastique amorphe particulièrement adapté pour le composite thermoplastique comprend:
- une quantité molaire de motifs 1,4 : 3,6-dianhydrohexitol (A) allant de 16 à 54 % ;
- une quantité molaire de motifs diol alicyclique (B) autre que les motifs 1,4 : 3,6-dianhydrohexitol (A) allant de 5 à 30 % ;
- une quantité molaire de motifs acide téréphtalique (C) allant de 45 à 55 %

Les quantités en différents motifs dans le polyester peuvent être déterminées par RMN 1H ou par analyse chromatographique du mélange de monomères issus d'une méthanolyse ou d'une hydrolyse complète du polyester, de préférence les quantités sont déterminées par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques amorphes utilisés selon l'invention présentent une température de transition vitreuse allant de 116 à 200°C, par exemple de 140 à 190°C.

La température de transition vitreuse est mesurée par les méthodes classiques et notamment une méthode de calorimétrie différentielle à balayage (DSC) en utilisant une vitesse de chauffe de 10°C/min. Le protocole expérimental est détaillé dans la partie exemples ci-après.

Le polyester thermoplastique amorphe présente notamment une clarté L* supérieure à 40. La clarté s'entend au sens des valeurs de coloration de Hunter où elle dérive de la luminance de la surface de l'objet. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab

Enfin, la viscosité réduite en solution est supérieure à 50 mL/g et inférieure à 120 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Le caractère amorphe des polyesters thermoplastiques utilisés selon la présente invention se caractérise, par l'absence de raies de diffraction aux rayons X ainsi que par l'absence d'un pic de fusion endothermique en Analyse Calorimétrique Différentielle à Balayage (DSC).

Selon un mode de réalisation particulier, le composite thermoplastique selon l'invention comprend 20 à 70% en poids de matrice en polyester thermoplastique amorphe telle que décrite précédemment, préférentiellement de 30 à 60 % en poids.

Selon un mode de réalisation, la matrice thermoplastique du composite selon l'invention est essentiellement constituée de polyester thermoplastique amorphe.

Le composite thermoplastique selon l'invention comprend également des fibres thermoplastiques comprenant un polyester thermoplastique semi-cristallin.

Le terme « fibres » tel qu'utilisé dans la présente invention est synonyme des termes filaments et fils, incluant ainsi les mono ou multi-filament continus ou discontinus, les multi-filaments non tordus ou enchevêtrés, les fils de base. De plus, le terme « fibres » est également utilisé quel que soit l'aspect dans lequel se trouve les fibres, à savoir sous forme de tissé ou de non-tissé.

Les fibres de polyester thermoplastique semi-cristallin jouent le rôle de renfort au sein du composite thermoplastique selon l'invention.

Plus particulièrement, le polyester thermoplastique semi-cristallin utilisé pour obtenir les fibres est un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] est d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

Le monomère (A) et le diol alicyclique (B) sont tels que décrits ci-dessus pour le polyester thermoplastique amorphe.

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,05 et d'au plus 0,30. Avantageusement, ce ratio est d'au moins 0,1 et d'au plus 0,28, et tout particulièrement ce ratio est d'au moins 0,15 et d'au plus 0,30.

Un polyester thermoplastique semi-cristallin particulièrement adapté pour obtenir les fibres selon l'invention comprend:
- une quantité molaire de motifs 1,4 : 3,6-dianhydrohexitol (A) allant de 2,5 à 15 % mol ;
- une quantité molaire de motifs diol alicyclique (B) autre que les motifs 1,4 : 3,6-dianhydrohexitol (A) allant de 30 à 42,5 % mol ;
- une quantité molaire de motifs acide téréphtalique (C) allant de 45 à 55 % mol.

Les fibres obtenues avec les polyesters thermoplastiques semi-cristallins décrits ci-dessus présentent avantageusement une température de fusion allant de 210 à 295°C, par exemple de 240 à 285 °C.

De plus, les polyesters thermoplastiques semi-cristallins présentent une température de transition vitreuse allant de 85 à 120°C, par exemple de 90 à 115°C.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est également détaillé dans la partie exemples ci-après.

Avantageusement, le polyester thermoplastique semi-cristallin présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique semi-cristallin utilisé selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique semi-cristallin est supérieure à 50 mL/g et de préférence inférieure à 120 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Comme précédemment développé pour la matrice thermoplastique, ce test de mesure de viscosité réduite en solution est, de par le choix des solvants et de la concentration des polymères utilisés, parfaitement adapté pour déterminer la viscosité du polymère thermoplastique semi-cristallin.

Le caractère semi-cristallin des polyesters thermoplastiques utilisés selon la présente invention se caractérise lorsque que ces derniers, après un traitement thermique de 16h à 170°C, présentent des raies de diffraction aux rayons X ou un pic de fusion endothermique en Analyse Calorimétrique Différentielle à Balayage (DSC).

A partir du polyester thermoplastique semi-cristallin tel que précédemment défini, les fibres selon l'invention peuvent être obtenues selon les méthodes connues de l'homme du métier comme par exemple la méthode du filage par voie fondue ou par des procédés en solution (aussi appelés voie humide ou voie sèche). D'une manière préférentielle, les fibres sont obtenues par la méthode de filage en voie fondue.

Les fibres peuvent indifféremment être des fibres tissées, des fibres non tissées, ou un mélange de fibres tissées et non tissées. Un non-tissé peut être constitué d'un voile, d'une toile, d'une nappe ou encore d'un matelas de fibres réparties directionnellement ou par hasard et dont la cohésion interne est assurée par des méthodes mécaniques, physiques ou chimiques ou encore par une combinaison de ces méthodes. Un exemple de cohésion interne peut être le collage et aboutit à l'obtention d'une toile non-tissée, ladite toile non-tissée pouvant ensuite être mise sous la forme d'un mat de fibres.

Selon un mode de réalisation particulier, les fibres du composite thermoplastique sont des fibres tissées. Le tissage desdites fibres peut être réalisé selon un entrecroisement taffetas, sergé, satin ou encore unidirectionnel, et de préférence selon un entrecroisement taffetas.

Selon un autre mode de réalisation, les fibres du composite thermoplastique sont non-tissées. Le non tissé de fibres peut être obtenu selon les techniques connues de l'homme du métier comme la voie sèche, la voie fondue, la voie humide ou le filage éclair (en anglais « flash spinning »). A titre d'exemple, la formation de fibres non-tissées par voie sèche peut notamment être réalisée par calandrage ou par un procédé aérodynamique (en anglais « Airlaid »). Concernant l'obtention en voie fondue, elle peut être réalisée par extrusion (en anglais « spinbonding technology » ou « spunbonded fabric ») ou par extrusion soufflage (en anglais « melt-blown »).

Les fibres de polyester selon l'invention présentent de très bonnes propriétés, à la fois du point de vue mécaniques que thermiques, et constituent un renfort de choix particulièrement adapté pour un composite thermoplastique. En effet, les fibres selon l'invention présentent par exemple une amélioration des propriétés mécaniques telles que l'allongement à la rupture ou encore la ténacité comparativement à des fibres polymères classiques.

De plus, l'utilisation des fibres selon l'invention pour la fabrication d'un composite thermoplastique est particulièrement avantageuse en ce qu'elle permet également d'éviter le phénomène de putréfaction pouvant parfois se produire avec certaines fibres naturelles.

Selon un mode de réalisation, le composite thermoplastique comprend de 30 à 80% en poids de fibres de polyester thermoplastiques semi cristallins telles que précédemment décrites, préférentiellement de 40 à 70 % en poids.

Selon un mode de réalisation les fibres thermoplastiques du composite selon l'invention sont essentiellement constituées de polyester thermoplastique semi-cristallin.

Selon un mode de réalisation, le composite thermoplastique est essentiellement constitué d'une matrice thermoplastique telle que définie précédemment et de fibres thermoplastiques telles que définies précédemment.

Le composite thermoplastique selon l'invention est particulièrement avantageux. En rupture avec les matériaux composites actuels, le composite thermoplastique selon l'invention est entièrement thermoplastique, aussi bien la matrice que le renfort en fibres, avec pour conséquence directe d'obtenir des facilités de recyclage jusqu'alors jamais atteinte. Les inventeurs ont ainsi constaté d'une manière tout à fait inédite que la proximité chimique de la matrice et des fibres selon l'invention permettait d'obtenir, lors d'un chauffage à une température supérieur à la température de fusion (Tf) des fibres, des réactions de transestérification entre ladite matrice et lesdites fibres, aboutissant ainsi à un matériau thermoplastique comportant des phases compatibles voire complètement homogènes selon les conditions de recyclage utilisées.

Jusqu'à présent pour le recyclage, bien que leurs matrices puissent être fondues, les composites thermoplastiques présentaient les même difficultés en terme de séparation fibres/matrice que les composites thermoductiles. Or, le composite selon l'invention étant entièrement thermoplastique, on s'affranchit de l'étape de séparation habituellement mise en œuvre. Ainsi, le recyclage est plus efficient, moins couteux, et permet d'obtenir non plus un composite, mais un matériau uniforme thermoplastique qui pourra être utilisé pour une multitude d'applications plastiques. En termes de recyclage et de valorisation des matériaux, et notamment des matériaux thermoplastiques, le composite thermoplastique selon l'invention s'inscrit donc comme une rupture technologique. Etant entendu que le composite selon l'invention présente au moins les mêmes propriétés mécaniques qu'un composite thermoplastique composé des renforts classiquement utilisés jusqu'alors.

Le polyester thermoplastique amorphe particulièrement adapté pour l'obtention de la matrice thermoplastique peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire (A)/[(A)+(B)] étant d'au moins 0,32 et d'au plus 0,75 et le ratio ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité pour l'obtention de la composition polymère.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076 ou un phosphonate tel que l'Irgamod® 195. L'anti-oxydant secondaire peut être des composés phosphorés trivalents tels que Ultranox® 626, Doverphos® S-9228, Hostanox® P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique ainsi récupéré peut ensuite servir de matrice thermoplastique dans le procédé décrit selon l'invention.

Un polyester semi-cristallin particulièrement adapté pour l'obtention des fibres thermoplastiques peut être préparé par un procédé de synthèse tel que précédemment décrit mais avec comme variante un ratio molaire (A)/[(A)+(B)] d'au moins 0,05 et d'au plus 0,30, ledit procédé comprenant également une étape d'augmentation de masse molaire.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à supérieure à la température de fusion du polymère. La température à l'intérieur de l'extrudeuse peut aller de 150 à 320°C.

Le polyester thermoplastique semi-cristallin obtenu après l'étape d'augmentation de masse molaire est récupéré et peut ensuite servir pour l'obtention des fibres thermoplastiques selon l'invention.

Un second objet de l'invention concerne un procédé de fabrication d'un composite thermoplastique, ledit procédé comprenant les étapes suivantes de :
a) fourniture d'une matrice polymère thermoplastique telle que décrite précédemment,
b) fourniture de fibres polymère thermoplastiques telles que décrites précédemment,
c) préparation d'un composite thermoplastique à partir de ladite matrice et desdites fibres.

Selon un mode de réalisation, la matrice en polymère est fournie de manière à ce que le composite thermoplastique comprenne de 30 à 80% en poids de fibres de polyester thermoplastiques semi cristallins telles que précédemment décrites, préférentiellement de 40 à 70 % en poids

L'étape c) du procédé selon l'invention consiste à préparer un composite thermoplastique à partir de ladite matrice et desdites fibres précédemment décrites.

Cette étape de préparation peut être réalisée par mélange ou incorporation des fibres au sein de la matrice de polyester suivie d'une étape de mise en forme. Au sens de la présente invention, les termes « imprégnation » et « mouillage » sont des synonymes. L'incorporation peut consister à imprégner les fibres en polyester thermoplastiques semi-cristallins par la matrice en polyester thermoplastique amorphe. L'incorporation selon le procédé de l'invention peut se faire par l'intermédiaire des techniques connues de l'homme du métier comme par exemple l'imprégnation par un fondu. Après l'imprégnation, une étape de mise en forme peut être mise en œuvre, ladite mise en forme pouvant également se faire selon les techniques de l'homme du métier comme par exemple par compression/estampage, par pultrusion, par basse pression sous vide ou encore par enroulement filamentaire.

Selon un mode de réalisation, l'incorporation est réalisée par imprégnation par un fondu et la mise en forme réalisée par compression à chaud. Selon ce mode de réalisation, les fibres de polyesters thermoplastiques semi-cristallin peuvent être sous forme d'un tissé taffetas qui peut être découpé et placé entre deux feuilles de matrice amorphe. L'ensemble est alors placé dans une presse, réchauffé au-dessus de la Tg de la matrice et pressé afin d'obtenir une plaque dont les fibres sont imprégnées par la matrice.

L'ensemble est ensuite réchauffé et placé dans un moule froid. Après pressage et refroidissement, l'ensemble obtenu constitue le composite thermoplastique, les fibres en polyester thermoplastique semi-cristallin sont parfaitement incorporées dans la matrice en polyester thermoplastique amorphe et ledit composite est particulièrement résistant.

Le procédé selon l'invention est donc particulièrement avantageux car il permet d'obtenir un composite entièrement thermoplastique, aussi bien la matrice que le renfort en fibres, entrainant ainsi l'obtention de facilités de recyclage jusqu'alors jamais atteinte.

Le composite thermoplastique selon l'invention trouve ainsi une application toute particulière dans la fabrication d'objets ou d'articles plastiques et peut ainsi être utile dans de nombreux secteurs d'activité, tels que l'automobile, l'aéronautique, le naval, le bâtiment ou encore le sport. En effet, ils pourront par exemple servir à fabriquer des pièces d'équipement automobile comme des intérieurs de portières, des coques de bateau ou encore pour fabriquer des matériaux de construction.

Les composites thermoplastiques selon l'invention trouveront également une application toute particulièrement pour la fabrication de pièces dans les secteurs où l'allègement global du poids des structures est recherché.

L'invention sera mieux comprise à l'aide des exemples ci-après qui se veulent purement illustratifs et ne limitent en rien la portée de la protection.

### EXEMPLES

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés :
1,4-Cyclohexane dimethanol (pureté 99%, mélange d'isomères cis et trans)
Isosorbide (pureté >99,5%) Polysorb® P de Roquette Frères
Acide téréphtalique (pureté 99+%) de Acros
Irganox® 1010 de BASF AG
Dibutylétain oxyde (pureté 98%) de Sigma Aldrich

### Préparation d'un composite thermoplastique

### A. Préparation de fibres thermoplastiques

### 1) Polymérisation

Le polyester thermoplastique **P1** est un polyester thermoplastique semi-cristallin préparé selon le mode opératoire ci-après, avec un ratio molaire motif 1,4 : 3,6-dianhydrohexitol (A) / somme des monomères diols soit (A) auquel il faut ajouter les motifs diols alicycliques (B) autre que les motifs 1,4 : 3,6-dianhydrohexitol (A), soit (A)/[(A)+(B)], d'au moins 0,05 et d'au plus 0,30.

Ainsi, dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). 4 cycles vide-azote sont effectués une fois la température du milieu réactionnel à 60°C.

Le mélange réactionnel est ensuite chauffé à 240°C (4°C/min) sous 6,6 bars de pression et sous agitation constante (150 tr/min) jusqu'à obtenir un taux d'estérification de 40%. Le taux d'estérification étant estimé à partir de la masse de distillat collectée. Une fois ce taux atteint, la température du mélange réactionnel est amenée à 250°C jusqu'à obtention d'un taux d'estérification de 55%. Une fois ce taux atteint, la pression du réacteur est diminuée jusqu'à la pression atmosphérique et la température est amenée à 260°C jusqu'à obtention d'un taux d'estérification de 80%. Puis, la pression est réduite à 0,7 mbar en 120 minutes selon une rampe logarithmique et la température amenée à 280°C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 80,1 mL/g⁻¹.

L'analyse par RMN 1H du polyester montre que le polyester final contient 17,0 mol% d'isosorbide par rapport aux diols.

En ce qui concerne les propriétés thermiques, le polymère présente une température de transition vitreuse de 96°C, une température de fusion de 253°C avec une enthalpie de fusion de 23,2 J/g.

Une étape de post condensation en phase solide a été réalisée sur 10 kg de ces granulés durant 20h à 210°C sous flux d'azote (1500 l/h) pour augmenter la masse molaire. La résine après condensation en phase solide présente une viscosité réduite en solution de 103,4 mL.g⁻¹.

Les granulés de polyester ainsi obtenus peuvent ensuite être mis en forme de manière à obtenir les fibres thermoplastiques.

### 2) Mise en forme

Les granulés de polyester **P1** obtenus à l'étape 1) de polymérisation sont séchés à 140°C sous azote afin d'atteindre un taux d'humidité résiduelle des granulés inférieur à 300 ppm et notamment 105 ppm.

Les granulés sont alors introduits dans une extrudeuse présentant 5 zones de chauffe : 300°C pour la zone d'introduction des granulés, 295°C en zone 2, 290°C en zone 3, 285°C en zone 4, 280°C en zone 5 et 278°C dans le tube, dans la pompe d'entrainement de la matière, et dans le filtre pour éliminer les gels et la tête de filage (dans le sens de circulation du flux de matière fondue).

La tête employée pour cet exemple permet de mettre en forme des mono ou des multi-filaments. Selon cet exemple, la tête de filière comporte 10 trous avec un débit réglé de manière à avoir un débit de matière par trou de 1,5 g/minute avec un diamètre de capillaire de 0,5 mm et une vitesse d'entrainement de 2000 m/minute.

En sortie de la tête de filage, un courant d'air à 25°C vient refroidir les différents filaments qui sont rassemblés au point de convergence puis enroulés au moyen d'un bobinoir.

Ces bobines sont par la suite installées sur un métier à tisser afin d'obtenir un tissage de type taffetas. Des fibres thermoplastiques tissées type taffetas sont ainsi obtenues.

### B. Préparation de la matrice thermoplastique

### 1. Polymérisation

Afin d'obtenir la matrice thermoplastique, un second polyester thermoplastique **P2** a été préparé selon le même mode opératoire que le polyester **P1.** Ce second polyester **P2** est un polyester thermoplastique amorphe. Les quantités des composés utilisés sont détaillées dans le tableau 1 ci-dessous :

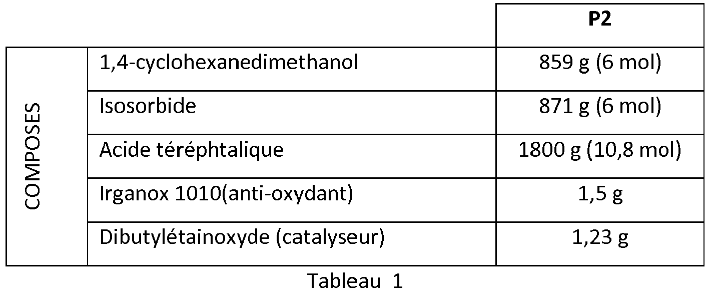

La résine ainsi obtenue avec le polyester **P2** a une viscosité réduite en solution de 54,9 mL/g⁻¹.

L'analyse par RMN 1H du polyester montre que le polyester final contient 44 moles % d'isosorbide par rapport aux diols. En ce qui concerne les propriétés thermiques, le polymère présente une température de transition vitreuse de 125°C.

Après analyse, le polyester **P2** n'est pas caractérisé par la présence de raies de diffraction aux rayons X ainsi que par la présence d'un pic de fusion endothermique en Analyse Calorimétrique Différentielle à Balayage (DSC) même après un traitement thermique de 16h à 170°C. Le polyester **P2** est donc amorphe.

### 2. Mise en forme

Les granulés **P2** sont séchés à 110°C sous vide pendant 4h. Le taux d'humidité avant extrusion cast est de 287 ppm. L'extrusion cast est réalisée à l'aide d'une extrudeuse Collin, équipée d'une filière plate.

Ces granulés sont maintenus sous atmosphère sèche et acheminés directement vers la trémie de l'extrudeuse. Les températures suivantes sont utilisées pour l'extrusion du polymère **P2** sur les fibres thermoplastiques tissées : 230°C/225°C /225°C /220°C (4 zones de chauffes, filière -> alimentation). La vitesse de rotation de la vis est de 80 rpm et la température des rouleaux de la calandreuse de 50°C.

Les feuilles obtenues ont une épaisseur de 500 µm.

### C. Mise en forme du composite thermoplastique

La préparation est réalisée par pressage, ledit pressage étant effectué sur une presse Carver.

Des carrés de fibres thermoplastiques tissées selon le tissage taffetas sont fixés entre deux feuilles extrudées elles même disposées entre les plateaux de la presse (type de pièces : plaques).

La température des plateaux est fixée à 160°C et une pression est appliquée sur la matière afin d'obtenir une bonne imprégnation des fibres thermoplastiques par la matrice thermoplastique. La masse de fibres thermoplastiques tissées est de 50% en poids du poids total en fibres thermoplastiques tissées taffetas et en matière fondue. Après 2 minutes de contact, la température des plateaux est abaissée à 50°C.

Ainsi, on obtient un composite thermoplastique sous forme de plaque au sein duquel l'imprégnation est parfaitement réalisée malgré le caractère thermoplastique des fibres et de la matrice. Ceci s'explique notamment en raison de l'aspect semi-cristallin des fibres thermoplastiques et de leur température de fusion plus élevée que celle de la matrice thermoplastique amorphe. Les plaques ainsi obtenues peuvent également être réchauffées et thermoformées sous forme de barquettes par exemple.

Des barreaux sont découpés dans les plaques ainsi obtenues et les propriétés mécaniques sont mesurées. Une amélioration des propriétés mécaniques par rapport à la matrice seule est constatée, notamment en ce qui concerne les propriétés de traction.

### Recyclage du composite thermoplastique

Les pièces composites obtenues sont broyées, séchées à 110°C sous vide durant 4h (taux d'humidité de 320 ppm), mélangées avec 100 ppm de dibutyl oxyde d'étain puis extrudées avec une température uniforme de 280°C avant refroidissement dans un bain d'eau froide et granulation.

Une analyse calorimétrique différentielle à balayage des granulés ainsi obtenus montre une diminution du pic de fusion à 253°C et l'apparition d'une transition vitreuse vers les 110°C. Ces observations témoignent ainsi de la mise en œuvre de réactions de transestérification au sein du matériau lors d'un chauffage à une température supérieure à la température de fusion des fibres thermoplastiques. Ainsi, lors d'un recyclage à ladite température, un matériau comportant des phases compatibles, voir complétement homogènes est obtenu.

Le composite thermoplastique selon l'invention est donc particulièrement avantageux en ce qu'il n'est plus nécessaire pour son recyclage, de séparer les fibres de la matrice. Une étape de chauffage à une température supérieure à la température des fibres thermoplastiques permet simplement d'obtenir un matériau thermoplastique qui pourra ensuite être réutilisé pour une multitude d'applications.

## Revendications

1. Composite thermoplastique comprenant :
- une matrice polymère thermoplastique, ladite matrice comprenant un polyester thermoplastique amorphe comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] est d'au moins 0,32 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g,
- des fibres polymère thermoplastique, lesdites fibres comprenant un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] est d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

2. Composite thermoplastique selon la revendication 1, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Composite thermoplastique selon l'une des revendications 1 ou 2, **caractérisé en ce que** les polyesters thermoplastiques amorphe et semi-cristallin sont exempts de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

4. Composite thermoplastique selon l'une des revendications 1 à 3, **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

5. Composite thermoplastique selon l'une des revendications 1 à 4, **caractérisé en ce que** le 1,4 : 3,6-dianhydrohexitol (A) est l'isosorbide.

6. Composite thermoplastique selon l'une des revendications 1 à 5, **caractérisé en ce qu'**il comprend 20 à 70% en poids de matrice en polyester thermoplastique amorphe, préférentiellement de 30 à 60 % en poids.

7. Composite thermoplastique selon l'une des revendications 1 à 6, **caractérisé en ce qu'**il comprend 30 à 80% en poids de fibres de polyester thermoplastiques semi cristallins, préférentiellement de 40 à 70 % en poids.

8. Procédé de fabrication d'un composite thermoplastique, ledit procédé comprenant les étapes suivantes de :
- fourniture d'une matrice en polymère, ledit polymère étant un polyester thermoplastique amorphe comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] étant d'au moins 0,32 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g,
- fourniture de fibres en polymère, ledit polymère étant un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] étant d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.
- préparation d'un composite thermoplastique à partir de ladite matrice et desdites fibres.

9. Procédé de fabrication selon la revendication 8, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

10. Procédé de fabrication selon l'une des revendications 8 ou 9, **caractérisé en ce que** le polyester thermoplastique est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

11. Procédé de fabrication selon l'une des revendications 8 à 10, **caractérisé en ce que** le 1,4 : 3,6-dianhydrohexitol (A) est l'isosorbide.

12. Procédé de fabrication selon l'une des revendications 8 à 11, **caractérisé en ce que** l'étape de préparation est mise en œuvre par imprégnation par un fondu suivie d'une étape de mise en forme par compression/estampage, par pultrusion, par basse pression sous vide ou encore par enroulement filamentaire.

## Patentansprüche

1. Thermoplastischer Verbundstoff, umfassend:
- eine thermoplastische Polymermatrix, wobei die Matrix einen amorphen thermoplastischen Polyester umfasst, der mindestens eine 1,4 : 3,6-Dianhydrohexitol-Einheit (A), mindestens eine von den 1,4 : 3,6-Dianhydrohexitol-Einheiten (A) verschiedene alicyclische Dioleinheit (B), und mindestens eine Terephthalsäure-Einheit (C) umfasst, wobei das molare Verhältnis (A)/[(A)+(B)] mindestens 0,32 und höchstens 0,75 beträgt, wobei der Polyester frei von nicht-cyclischen aliphatischen Dioleinheiten ist oder eine molare Menge an nicht-cyclischen aliphatischen Dioleinheiten, bezogen auf die Gesamtheit der Monomereinheiten des Polyesters, von weniger als 5 % umfasst, und wobei die reduzierte Lösungsviskosität (25°C; Phenol (50%m) : ortho-Dichlorbenzol (50%m); 5 g/L Polyester) größer ist als 50 mL/g,
- Thermoplastische Polymerfasern, wobei die Fasern einen teilkristallinen thermoplastischen Polyester umfassen, der mindestens eine 1,4 : 3,6-Dianhydrohexitol-Einheit (A) und mindestens eine von den 1,4 : 3,6-Dianhydrohexitol-Einheiten (A) verschiedene alicyclische Dioleinheit (B), mindestens eine Terephthalsäure-Einheit (C) enthält, wobei das molare Verhältnis (A)/[(A)+(B)] mindestens 0,05 und höchstens 0,30 beträgt, wobei der Polyester frei von nicht-cyclischen aliphatischen Dioleinheiten ist oder eine molare Menge an nicht-cyclischen aliphatischen Dioleinheiten, bezogen auf die Gesamtheit der Monomereinheiten des Polyesters, von weniger als 5 % umfasst, und wobei die reduzierte Lösungsviskosität (25°C; Phenol (50%m) : ortho-Dichlorbenzol (50%m); 5 g/L Polyester) größer ist als 50 mL/g.

2. Thermoplastischer Verbundstoff nach Anspruch 1, **dadurch gekennzeichnet, dass** das alicyclische Diol (B) ein Diol ist, das ausgewählt ist aus 1,4-Cyclohexandimethanol, 1,2-Cyclohexandimethanol, 1,3-Cyclohexandimethanol oder einer Mischung dieser Diole, besonders bevorzugt 1,4-Cyclohexandimethanol.

3. Thermoplastischer Verbundstoff nach Anspruch 1 oder 2, **dadurch gekennzeichnet, dass** die amorphen und teilkristallinen thermoplastischen Polyester frei von nicht-cyclischen aliphatischen Dioleinheiten sind oder eine molare Menge an nicht-cyclischen aliphatischen Dioleinheiten, bezogen auf die Gesamtheit der Monomereinheiten des Polyesters, von weniger als 1 % umfassen, wobei der Polyester vorzugsweise frei von nicht-cyclischen aliphatischen Dioleinheiten ist.

4. Thermoplastischer Verbundstoff nach einem der Ansprüche 1 bis 3, **dadurch gekennzeichnet, dass** das molare Verhältnis (3,6-Dianhydrohexitol-Einheit (A) + von den 1,4 : 3,6-Dianhydrohexitol-Einheiten (A) verschiedene alicyclische Dioleinheit (B)) / (Terephthalsäure-Einheit (C)) von 1,05 bis 1,5 beträgt.

5. Thermoplastischer Verbundstoff nach einem der Ansprüche 1 bis 4, **dadurch gekennzeichnet, dass** das 1,4 : 3,6-Dianhydrohexitol (A) Isosorbid ist.

6. Thermoplastischer Verbundstoff nach einem der Ansprüche 1 bis 5, **dadurch gekennzeichnet, dass** er 20 bis 70 Gew.-% amorphe thermoplastische Polyestermatrix umfasst, vorzugsweise 30 bis 60 Gew.-%.

7. Thermoplastischer Verbundstoff nach einem der Ansprüche 1 bis 6, **dadurch gekennzeichnet, dass** er 30 bis 80 Gew.-% teilkristalline thermoplastische Polyesterfasern umfasst, vorzugsweise 40 bis 70 Gew.-%.

8. Verfahren zur Herstellung eines thermoplastischen Verbundstoffs, wobei das Verfahren die folgenden Schritte umfasst:
- Bereitstellen einer thermoplastischen Polymermatrix, wobei die Matrix einen amorphen thermoplastischen Polyester umfasst, der mindestens eine 1,4 : 3,6-Dianhydrohexitol-Einheit (A), mindestens eine von den 1,4 : 3,6-Dianhydrohexitol-Einheiten (A) verschiedene alicyclische Dioleinheit (B), und mindestens eine Terephthalsäure-Einheit (C) umfasst, wobei das Verhältnis (A)/[(A)+(B)] mindestens 0,32 und höchstens 0,75 beträgt, wobei der Polyester frei von nicht-cyclischen aliphatischen Dioleinheiten ist oder eine molare Menge an nicht-cyclischen aliphatischen Dioleinheiten, bezogen auf die Gesamtheit der Monomereinheiten des Polyesters, von weniger als 5 % umfasst, und wobei die reduzierte Lösungsviskosität (25°C; Phenol (50%m) : ortho-Dichlorbenzol (50%m); 5 g/L Polyester) größer ist als 50 mL/g,
- Bereitstellen von Polymerfasern, wobei das Polymer ein teilkristalliner thermoplastischer Polyester ist, der mindestens eine 1,4 : 3,6-Dianhydrohexitol-Einheit (A), mindestens eine von den 1,4 : 3,6-Dianhydrohexitol-Einheiten (A) verschiedene alicyclische Dioleinheit (B), und mindestens eine Terephthalsäure-Einheit (C) umfasst, wobei das molare Verhältnis (A)/[(A)+(B)] mindestens 0,05 und höchstens 0,30 beträgt, wobei der Polyester frei von nicht-cyclischen aliphatischen Dioleinheiten ist oder eine molare Menge an nicht-cyclischen aliphatischen Dioleinheiten, bezogen auf die Gesamtheit der Monomereinheiten des Polyesters, von weniger als 5 % umfasst, und wobei die reduzierte Lösungsviskosität (25°C; Phenol (50%m) : ortho-Dichlorbenzol (50%m); 5 g/L Polyester) größer ist als 50 mL/g,
- Herstellen eines thermoplastischen Verbundstoffs aus der Matrix und den Fasern.

9. Verfahren zur Herstellung nach Anspruch 8, **dadurch gekennzeichnet, dass** das alicyclische Diol (B) ein Diol ist, das ausgewählt ist aus 1,4-Cyclohexandimethanol, 1,2-Cyclohexandimethanol, 1,3-Cyclohexandimethanol oder einer Mischung dieser Diole, besonders bevorzugt 1,4-Cyclohexandimethanol.

10. Verfahren zur Herstellung nach Anspruch 8 oder 9, **dadurch gekennzeichnet, dass** der thermoplastische Polyester frei von nicht-cyclischen aliphatischen Dioleinheiten ist oder eine molare Menge an nicht-cyclischen aliphatischen Dioleinheiten, bezogen auf die Gesamtheit der Monomereinheiten des Polyesters, von weniger als 1 % umfasst, wobei der Polyester vorzugsweise frei von nicht-cyclischen aliphatischen Dioleinheiten ist.

11. Verfahren zur Herstellung nach einem der Ansprüche 8 bis 10, **dadurch gekennzeichnet, dass** das 1,4 : 3,6-Dianhydrohexitol (A) Isosorbid ist.

12. Verfahren zur Herstellung nach einem der Ansprüche 8 bis 11, **dadurch gekennzeichnet, dass** der Herstellungsschritt durch Imprägnieren mit einer Schmelze erfolgt, gefolgt von einem Formgebungsschritt durch Pressen/Stanzen, Pultrusion, Niederdruck-Vakuum oder Filamentwicklung.

## Claims

1. A thermoplastic composite comprising:
- a thermoplastic polymer matrix, said matrix comprising an amorphous thermoplastic polyester comprising at least one 1,4: 3,6-dianhydrohexitol unit (A), at least one alicyclic diol unit (B) other than the 1,4: 3,6-dianhydrohexitol units (A), at least one terephthalic acid unit (C), wherein the (A)/[(A)+(B)] molar ratio is at least 0.32 and at most 0.75, said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of which is greater than 50 ml/g,
- thermoplastic polymer fibers, said fibers comprising a semicrystalline thermoplastic polyester comprising at least one 1,4: 3,6-dianhydrohexitol unit (A), at least one alicyclic diol unit (B) other than the 1,4: 3,6-dianhydrohexitol units (A), at least one terephthalic acid unit (C), wherein the (A)/[(A)+(B)] molar ratio is at least 0.05 and at most 0.30, said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of which is greater than 50 ml/g.

2. The thermoplastic composite as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The thermoplastic composite as claimed in one of claims 1 and 2, **characterized in that** the amorphous and semicrystalline thermoplastic polyesters do not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

4. The thermoplastic composite as claimed in one of claims 1 to 3, **characterized in that** the (3,6-dianhydrohexitol unit (A) + alicyclic diol unit (B) other than the 1,4: 3,6-dianhydrohexitol units (A))/(terephthalic acid unit (C)) molar ratio is from 1.05 to 1.5.

5. The thermoplastic composite as claimed in one of claims 1 to 4, **characterized in that** the 1,4: 3,6-dianhydrohexitol (A) is isosorbide.

6. The thermoplastic composite as claimed in one of claims 1 to 5, **characterized in that** it comprises 20 to 70% by weight of amorphous thermoplastic polyester matrix, preferentially 30 to 60% by weight.

7. The thermoplastic composite as claimed in one of claims 1 to 6, **characterized in that** it comprises 30 to 80% by weight of semicrystalline thermoplastic polyester fibers, preferentially 40 to 70% by weight.

8. A process for producing a thermoplastic composite, said process comprising the following steps of:
- providing a polymer matrix, said polymer being an amorphous thermoplastic polyester comprising at least one 1,4: 3,6-dianhydrohexitol unit (A), at least one alicyclic diol unit (B) other than the 1,4: 3,6-dianhydrohexitol units (A), at least one terephthalic acid unit (C), wherein the (A)/[(A)+(B)] ratio is at least 0.32 and at most 0.75, said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of which is greater than 50 ml/g,
- providing polymer fibers, said polymer being a semicrystalline thermoplastic polyester comprising at least one 1,4: 3,6-dianhydrohexitol unit (A), at least one alicyclic diol unit (B) other than the 1,4: 3,6-dianhydrohexitol units (A), at least one terephthalic acid unit (C), wherein the (A)/[(A)+(B)] ratio is at least 0.05 and at most 0.30, said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of which is greater than 50 ml/g;
- preparing a thermoplastic composite from said matrix and said fibers.

9. The production process as claimed in claim 8, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

10. The production process as claimed in one of claims 8 and 9, **characterized in that** the thermoplastic polyester does not contain any aliphatic non-cyclic diol units, or comprises a molar amount of aliphatic non-cyclic diol units, relative to all the monomer units of the polyester, of less than 1%, and preferably the polyester does not contain any aliphatic non-cyclic diol units.

11. The production process as claimed in one of claims 8 to 10, **characterized in that** the 1,4: 3,6-dianhydrohexitol (A) is isosorbide.

12. The production process as claimed in one of claims 8 to 11, **characterized in that** the preparation step is carried out by impregnation with a melt followed by a step of shaping by compression/stamping, by pultrusion, by low pressure under vacuum or else by filament winding.
